(19) Europäisches Patentamt
European Patent Office
Office européen des brevets

(11) EP 4 488 091 A1

(12) **EUROPEAN PATENT APPLICATION**
published in accordance with Art. 153(4) EPC

(43) Date of publication:
**08.01.2025 Bulletin 2025/02**

(21) Application number: **22929720.5**

(22) Date of filing: **01.03.2022**

(51) International Patent Classification (IPC):
***B60K 6/442*** *(2007.10)* ***B60W 10/02*** *(2006.01)*
***B60W 10/18*** *(2012.01)*

(52) Cooperative Patent Classification (CPC):
**B60K 6/442; B60W 10/02; B60W 10/18;**
Y02T 10/62

(86) International application number:
**PCT/JP2022/008696**

(87) International publication number:
**WO 2023/166572 (07.09.2023 Gazette 2023/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsubishi Jidosha Kogyo Kabushiki Kaisha**
**Tokyo 108-8410 (JP)**

(72) Inventors:
- **SHIMIZU, Ryo**
  **Tokyo 108-8410 (JP)**
- **YAGURA, Hirofumi**
  **Tokyo 108-8410 (JP)**
- **TAKEUCHI, Hitoshi**
  **Tokyo 108-8410 (JP)**
- **IKOMA, Norihiko**
  **Tokyo 108-8410 (JP)**

(74) Representative: **Vossius & Partner Patentanwälte Rechtsanwälte mbB**
**Siebertstrasse 3**
**81675 München (DE)**

(54) **VEHICLE CONTROL DEVICE**

(57) This vehicle control device controls the traveling of a vehicle by switching the respective connection and disconnection states of a first power transmission path between an engine and a drive shaft and a second power transmission path between a rotary electric machine and the drive shaft, the vehicle control device limiting a deceleration torque due to a regenerative brake so that the deceleration torque is greater than a lower limit torque in accordance with a brake operation amount on the vehicle exceeding a prescribed threshold, when the first power transmission path is in an engaged state and the second power transmission path is in a released state.

EP 4 488 091 A1

FIG. 5

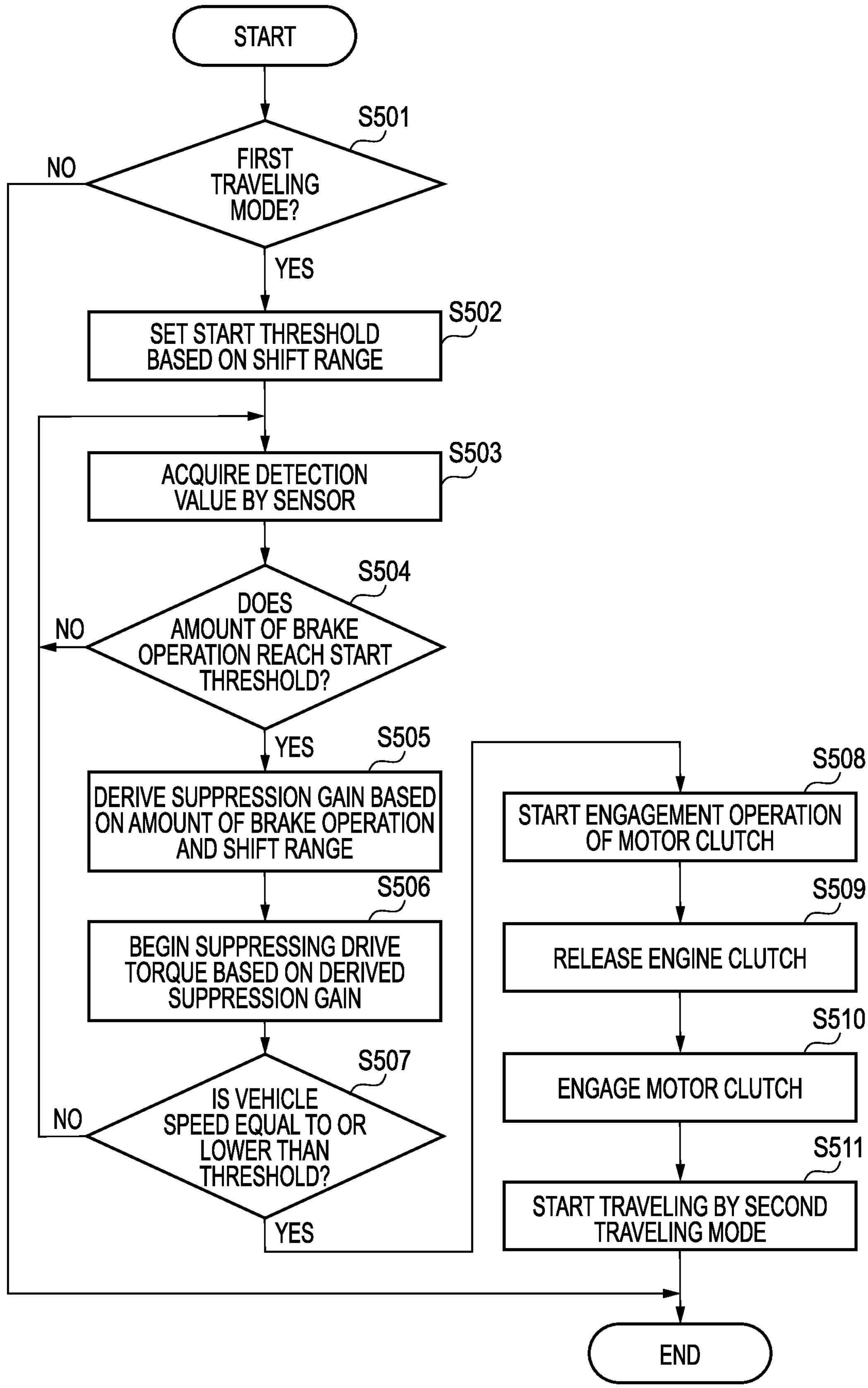
START
S501
FIRST TRAVELING MODE?
NO
YES
S502
SET START THRESHOLD BASED ON SHIFT RANGE
S503
ACQUIRE DETECTION VALUE BY SENSOR
S504
DOES AMOUNT OF BRAKE OPERATION REACH START THRESHOLD?
NO
YES
S505
DERIVE SUPPRESSION GAIN BASED ON AMOUNT OF BRAKE OPERATION AND SHIFT RANGE
S506
BEGIN SUPPRESSING DRIVE TORQUE BASED ON DERIVED SUPPRESSION GAIN
S507
IS VEHICLE SPEED EQUAL TO OR LOWER THAN THRESHOLD?
NO
YES
S508
START ENGAGEMENT OPERATION OF MOTOR CLUTCH
S509
RELEASE ENGINE CLUTCH
S510
ENGAGE MOTOR CLUTCH
S511
START TRAVELING BY SECOND TRAVELING MODE
END

## Description

TECHNICAL FIELD

The present invention relates to a vehicle control device.

BACKGROUND ART

A hybrid vehicle equipped with an engine and a rotation electric machine (motor, generator, motor generator) has become widespread. The hybrid vehicle has a plurality of traveling modes that can be switched based on user operation, or the like. The traveling modes include an EV mode in which the vehicle travels only by the motor using charged electric power from a battery, a series mode in which the vehicle travels only by the motor while the engine causes the generator to generate electricity, and a parallel mode in which the vehicle travels mainly by the engine while being assisted with the motor if necessary.

Additionally, some hybrid vehicles and the like are equipped with regenerative brakes. In these vehicles, in order to recover deceleration energy during brake operation, the motor or generator performs an output related to generating electricity as a regenerative torque to the extent possible, depending on an amount of brake operation.

In a hybrid vehicle capable of outputting engine power and motor power separately, separate power transmission paths are provided: one from the engine to a driving wheel, and another from the motor to the driving wheel. Each power transmission path is provided with a clutch, and the transmission of power is controlled by engaging/releasing the clutch. In addition, when the vehicle can maintain traveling using only engine output when the engine clutch is engaged, drag loss can be reduced by releasing the motor clutch. When the motor clutch is released, unnecessary power consumption can be suppressed by setting the motor rotation speed to zero or substantially zero.

Various controls are considered for an event that occurs when engaging/releasing the clutch, with the aim of improving driver's operational feel. Patent Literature 1 discloses a configuration that compensates for a response delay between when an accelerator pedal is depressed and when the clutch is connected, with the aim of improving a response delay when the clutch is connected.

CITATION LIST

PATENT LITERATURE

Patent Literature 1: WO2020/148973A

SUMMARY OF INVENTION

TECHNICAL PROBLEM

When the motor clutch is engaged, motor rotation speed and axle rotation are synchronized to suppress clutch engagement shock. In this case, rotation synchronization time and clutch engagement time due to clutch engagement operation are required. When the vehicle is suddenly decelerated while the motor clutch is in a released state, vehicle speed will drop to a speed range where engine stall may occur before the motor rotation is synchronized and the motor clutch is engaged. In this case, to avoid engine stall, it is necessary to reliably release the engine clutch when the vehicle speed is below a predetermined vehicle speed. In this case, the axle is no longer connected to both the engine and the motor, which can transmit power, and the driving force becomes zero. Then, a deceleration torque returns when the motor clutch is connected, causing a vehicle vibration due to a fluctuation in driving force.

The present invention is devised in consideration of the above-described problems, and an object of the present invention is to suppress a vehicle vibration that occurs due to control when sudden deceleration occurs while a motor clutch is in a released state. However, this is not the only object, and another object of the present invention is to achieve an operational effect that cannot be obtained by the related art, which is derived from configurations shown in embodiments described below.

SOLUTION TO PROBLEM

A vehicle control device according to an embodiment of the present invention has the following configuration. That is, in a vehicle control device configured to control traveling of a vehicle by switching between connection and disconnection of a first power transmission path between an engine and a drive shaft and a second power transmission path between a rotation electric machine and the drive shaft, when the first power transmission path is in an engaged state and the second power transmission path is in a released state, in response to an amount of brake operation for the vehicle exceeding a predetermined threshold, a deceleration torque by a regenerative brake is limited to be greater than a lower limit torque.

ADVANTAGEOUS EFFECTS OF INVENTION

According to the present invention, it is possible to suppress a vehicle vibration that occurs due to control when sudden deceleration occurs while a motor clutch is in a released state.

BRIEF DESCRIPTION OF DRAWINGS

FIG. 1 is a schematic diagram illustrating an example of a configuration of a vehicle according to a present embodiment.
FIG. 2 is a graph for illustrating control timing according to the present embodiment.
FIG. 3 is a graph for illustrating a relationship between a suppression gain according to a shift range and an amount of brake operation according to the present embodiment.
FIG. 4 is a graph for illustrating a suppression gain according to a brake operation according to the present embodiment.
FIG. 5 is a flow chart of control according to the present embodiment.

DESCRIPTION OF EMBODIMENTS

A vehicle control device as an embodiment will be described with reference to the drawings. The embodiments described below are merely examples, and are not intended to exclude various modifications or application of techniques not explicitly stated in the following embodiments. Each configuration of these embodiments can be modified in various ways without departing from the spirit of the embodiment thereof. Further, components can be selected or combined as needed. In addition, the same components in each drawing are given the same reference signs to indicate correspondence.

<First Embodiment>

[Overall Configuration]

A vehicle 100 to which a control device according to this embodiment can be applied will be described. The vehicle 100 is a hybrid vehicle equipped with an engine 101 as a drive source, a motor 107 (first rotation electric machine) for traveling, and a generator 102 for generating electricity. Therefore, the vehicle 100 according to this embodiment can be a so-called Hybrid Vehicle (HV), Hybrid Electric Vehicle (HEV), or Plug in Hybrid Electric Vehicle (PHEV: a plug-in hybrid capable of external charging or external power supply). In this embodiment, the vehicle 100 will be described as a front-wheel drive vehicle, but is not limited to this.

The generator 102 is connected to the engine 101 and can operate independently of an operation of the motor 107. The engine 101 is connected to a drive shaft 104 via an engine clutch 103. When the engine clutch 103 is engaged, the power generated by the engine 101 is transmitted to the drive shaft 104. The motor 107 is connected to the drive shaft 104 via a motor clutch 106. When the motor clutch 106 is engaged, the power generated by the motor 107 is transmitted to the drive shaft 104. For convenience, a power transmission path via the engine clutch 103 is also referred to as a "first power transmission path", and a power transmission path via the motor clutch 106 is also referred to as a "second power transmission path".

Driving wheels 105 (front wheels) are mounted on the drive shaft 104. Driven wheels 114 (rear wheels) are mounted on an axle 113.

The vehicle 100 is also provided with an Electronic Control Unit (ECU) 108, which corresponds to a control device according to this embodiment. The ECU 108 is, for example, an electronic control device configured as a Large-Scale Integration (LSI) device or an embedded electronic device that integrates a microprocessor, a Read Only Memory (ROM), a Random Access Memory (RAM), and the like. The ECU 108 acquires signals detected by various sensors provided in the vehicle 100 via a Car Area Network (CAN) or the like, and controls the vehicle 100. The sensors provided in the vehicle 100 include an accelerator opening sensor 109, a brake sensor 110, and a speed sensor 111. The accelerator opening sensor 109 detects an amount (accelerator opening) of depression of an accelerator pedal (not illustrated). The brake sensor 110 detects an amount of depression of a brake pedal (not illustrated). The speed sensor 111 detects the vehicle speed of the vehicle 100. The vehicle 100 is also provided with a battery 112 for driving, which supplies and charges electric power.

The engine 101 is an internal combustion engine (gasoline engine, diesel engine) that uses gasoline or light oil as fuel. An operating state of the engine 101 may be controlled by the ECU 108, or may be controlled by an electronic control device (not illustrated) separate from the ECU 108. The generator 102 and motor 107 in this embodiment are electric generators (motor generators) that function both as an electric motor and as a generator. The motor 107 is a drive source that exchanges electric power with the battery 112, and mainly functions as an electric motor to drive the vehicle 100 and as a generator during regeneration.

The generator 102 functions as an electric motor (starter) when starting the engine 101, and is driven by the power of the engine 101 to generate electricity when the engine 101 is operating. Further, the generator 102 transmits a driving force to the drive shaft 104 of the vehicle 100 in a power running state. An inverter (not illustrated) that converts DC current and AC current is provided around (or inside) each of the motor 107 and the generator 102. The rotational speeds and operating states (power running operation, regenerative/generative operation) of the motor 107 and the generator 102 are controlled by controlling the inverters (not illustrated).

The vehicle 100 can travel in a plurality of traveling modes, such as EV mode, series mode, and parallel mode. These traveling modes are alternatively selected by the ECU 108 depending on the vehicle state, traveling state, driving force required by a driver, and the like. In addition, the operation of the engine 101, generator 102, and motor 107 is controlled and used appropriately depending on the traveling mode.

The EV mode is a traveling mode in which the vehicle 100 is driven only by the motor 107 using charged electric power of the battery 112 for driving while the engine 101 and the generator 102 are stopped. The EV mode is selected, for example, when the required driving force and the vehicle speed are both low or when a charged level of the battery 112 is high. The series mode is a traveling mode in which the engine 101 drives the generator 102 to generate electricity and the motor 107 drives the vehicle 100 using the generated electricity. The series mode is selected, for example, when the required driving force is high or the charged level of the battery 112 is low. The parallel mode is a traveling mode in which the vehicle 100 is driven mainly by the driving force of the engine 101 and the motor 107 assists in driving the vehicle 100 as necessary. The parallel mode is selected, for example, when the vehicle speed is high or the required driving force is high. The switching control and application scenes of each traveling mode are not limited to those described above, and may be switched according to any condition.

The engine 101 and motor 107 are connected in parallel to the driving wheels 105 (here, the front wheels) via a transaxle (not illustrated) that contains multiple gears and clutches. The engine 101 is also connected to the generator 102 via the transaxle (not illustrated), and the power of the engine 101 is also transmitted to the generator 102.

The transaxle is a power transmission device that integrates a final drive (final speed reducer) including a differential device and a transmission (speed reducer), and contains multiple mechanisms that transmit power between a drive source and a driven device.

The engine clutch 103 is, for example, a wet multi-plate clutch or a dog clutch. Power on an upstream side (the side of the engine 101 and generator 102) of the power transmission path from the engine clutch 103 is transmitted to the drive shaft 104 when the engine clutch 103 is in an engaged state (connected state), and is cut off when the engine clutch 103 is in a released state (disconnected state). The connected/disconnected state of the engine clutch 103 is controlled by the ECU 108.

The motor clutch 106 is, for example, a wet multi-plate clutch or a dog clutch. Power (that is, the driving force of the motor 107) on an upstream side of the power transmission path from the motor clutch 106 is transmitted to the drive shaft 104 when the motor clutch 106 is in an engaged state, and is cut off when the motor clutch 106 is in a released state. The connected/disconnected state of the motor clutch 106 is controlled by the ECU 108.

For example, when the traveling mode is EV mode or series mode, the engine clutch 103 is in a released state and the motor clutch 106 is in an engaged state. When the traveling mode is parallel mode and motor assist (a driving force of the motor 107) is not required, the engine clutch 103 is in an engaged state and the motor clutch 106 is in a released state. When the traveling mode is parallel mode and motor assist is required, both the engine clutch 103 and the motor clutch 106 are in an engaged state.

The vehicle 100 according to this embodiment has a regenerative braking function. Strength of the regenerative braking force produced by the regenerative brakes can be changed by switching a shift range based on the driver's operation, or the like. The number of shift range stages for setting the regenerative braking force is not particularly limited, but three stages including B0, B1, and B2 will be described here as an example. The signs indicating the shift ranges are only examples and do not necessarily match the signs of the shift ranges actually installed in the vehicle 100. A relationship between the strength of the regenerative braking forces is B2 > B1 > B0.

[Control Timing]

FIG. 2 is a diagram for illustrating control timing of the vehicle 100 according to this embodiment. (a) of FIG. 2 is a graph illustrating change in an amount of brake operation, with a vertical axis representing an amount of brake operation and a horizontal axis representing time. (b) of FIG. 2 is a graph illustrating change in the vehicle speed of the vehicle 100, with a vertical axis representing the vehicle speed and a horizontal axis representing time. (c) of FIG. 2 is a graph illustrating a connected/disconnected state of the motor clutch 106, with a vertical axis representing either a released state (open) or an engaged state (closed) and a horizontal axis representing time. (d) of FIG. 2 is a graph illustrating a connected/disconnected state of the engine clutch 103, with a vertical axis representing either a released state (open) or an engaged state (closed) and a horizontal axis representing time. (e) of FIG. 2 is a graph illustrating change in a drive torque, with a vertical axis representing a drive torque and a horizontal axis representing time. It is assumed that the timing of the time is the same in each graph illustrated in FIG. 2.

The graphs will be described in correspondence with each other. Here, a traveling mode (hereinafter also referred to as a "first traveling mode") in which a vehicle travels on power from the engine 101 and a traveling mode (hereinafter also referred to as a "second traveling mode") in which the vehicle travels on power from the motor 107 will be described as examples. Further, at a left end (time t0) of the graph shown in FIG. 2, the vehicle 100 is assumed to be traveling at a constant vehicle speed in the first traveling mode. Therefore, the motor clutch 106 is in a released state, and the engine clutch 103 is in an engaged state.

First, operation and control of the related art will be described. A graph 214 in (e) of FIG. 2 corresponds to the change in the related art. At time t0, the drive torque has a constant value (that is, deceleration torque) on a regeneration side. Although not illustrated in FIG. 2, it is assumed that there is no operation on an accelerator pedal at time t0. Therefore, the drive torque at time t0 corresponds to the engine braking torque.

At time t1, a driver begins a brake operation. Here, it is assumed that an amount of brake operation increases at a constant rate until time t5, and remains constant thereafter. As the brake operation begins, the vehicle speed of the vehicle 100 begins to decrease, and the value (that is, deceleration torque) of the drive torque to the regeneration side increases.

Next, a value of the drive torque becomes constant after reaching a predetermined value. Then, when the vehicle speed falls below a certain value (time t5), the engine clutch 103 is released to prevent engine stall. In this case, the motor clutch 106 is also in a released state, so the power supply to the drive shaft 104 becomes zero (time t5 to t6). Next, when the motor clutch 106 is engaged (time t6), power is supplied to the drive shaft 104, but the sudden drive torque causes a vibration of the vehicle 100 (a range of a broken line 210 in (e) of FIG. 2). An engagement operation of the motor clutch 106 may be started before the engine clutch 103 is released, but because this engagement operation takes a certain amount of time, there may be a period of time during which the power to the drive shaft 104 becomes zero.

Fluctuations in the drive torque during time periods from time t4 to t5 and from time t6 to t7 are caused by processes accompanying the engagement/release of each clutch.

In the above control, from time t0 to t5, the power of the engine 101 and generator 102 is supplied to the drive shaft 104. Further, from time t6 to t7, the power of the motor 107 is supplied to the drive shaft 104.

Next, the operation and control according to this embodiment will be described. The operation shown in (a) of FIG. 2 to (d) of FIG. 2 is assumed to be the same. A graph 212 in (e) of FIG. 2 corresponds to the change in this embodiment. Graphs 211 and 213 also show a lower limit value (lower limit torque) for the drive torque according to this embodiment, and the lower limit value is switched depending on the shift range. Control based on the shift range will be described below.

At time t0, the drive torque has a constant value (that is, deceleration torque) on the regeneration side. This is a similar value as in the control in the related art shown in the graph 211.

At time t1, the driver begins a brake operation. Here, it is assumed that the amount of brake operation increases at a constant rate until time t5, and remains constant thereafter. As the brake operation begins, the vehicle speed of the vehicle 100 begins to decrease, and the value (that is, deceleration torque) of the drive torque to the regeneration side increases.

Next, a value of the drive torque becomes constant after reaching a predetermined value. Then, at the timing shown as time t3, it is assumed that the amount of brake operation reaches a threshold (threshold 202 in (a) of FIG. 2).

When the amount of brake operation reaches the threshold, the drive torque is controlled to approach 0. In other words, the drive torque is suppressed in accordance with the change in the lower limit torque shown in the graph 211. Details of the amount of change in a drive torque here will be described below. After that, control is performed so that the drive torque remains constant (here, 0). As a result, fluctuations within the range of the broken line 210 are suppressed, making it possible to suppress vibrations that occur in a case of the related art.

The graph 213 shows the change in the lower limit range corresponding to a shift range different from that of the graph 211. In this case, the threshold for the amount of brake operation is set to a threshold 201 in (a) of FIG. 2. In other words, the threshold 201 is set to a value lower than the threshold 202 as the threshold for the amount of brake operation. The change in the lower limit torque starts from time t2 when the amount of brake operation reaches the threshold 201. The threshold for the amount of brake operation may be set in accordance with the shift range described above.

FIG. 3 is a graph illustrating a relationship between an amount of brake operation and a suppression gain with respect to a drive torque according to this embodiment. In FIG. 3, a vertical axis represents the suppression gain (0 to 1), and the horizontal axis represents the amount of brake operation. In this embodiment, the relationship between the amount of brake operation and the suppression gain is switched depending on the shift range described above. The higher the suppression gain, the higher the braking force based on the amount of brake operation.

In this embodiment, it is defined that the higher the regenerative braking force in a shift range, the faster the suppression gain in response to the amount of brake operation is reduced. That is, in the shift range B2, which has the highest regenerative braking force among the shift ranges exemplified above, the suppression gain decreases most quickly in response to an increase in the amount of brake operation. On the other hand, in the shift range B0, which has the lowest regenerative braking force, the suppression gain decreases most slowly in response to an increase in the amount of brake operation. Information indicating this correspondence is set in advance in a database or the like, and the ECU 108 reads it out as appropriate according to the shift range to perform control.

FIG. 4 is a diagram for illustrating a relationship between an amount of brake operation, brake operation determination, and a suppression gain over time. (a) of FIG. 4 is a graph illustrating change in the amount of brake operation, with a vertical axis representing an amount of brake operation and a horizontal axis representing time. (b) of FIG. 4 is a graph illustrating an on/off determination result of the brake operation determination, with a vertical axis representing either the on state or off state of the brake operation and a horizontal axis representing time. (c) of FIG. 4 is a graph illustrating change in the suppression gain, with a vertical axis representing a value of the suppression gain and a horizontal axis representing time. It is assumed that the timing of the time is the same in each graph illustrated in FIG. 4.

In (a) of FIG. 4, thresholds Tha, Thb, and The for the amount of brake operation respectively indicate thresholds corresponding to the shift ranges B2, B1, and B0 exemplified above. In other words, the threshold Tha corresponding to B2 is set to the lowest value.

In the case of shift range B2, at time t1, the brake operation determination is turned ON in response to the amount of brake operation reaching Tha. Accordingly, the suppression gain decreases. In the case of shift range B1, at time t2, the brake operation determination is turned ON in response to the amount of brake operation reaching Thb. Accordingly, the suppression gain decreases. In the case of shift range B2, at time t3, the brake operation determination is turned ON in response to the amount of brake operation reaching Thc. Accordingly, the suppression gain decreases.

In the examples of FIGS. 3 and 4, the suppression gain decreases at a constant rate (constant proportionality) regardless of the shift range, but the present invention is not limited to this. For example, the suppression gain may be reduced by a fluctuation rate indicated by a curve. Further, the fluctuation rate may differ depending on the shift range.

In this embodiment, the lower limit torque (graphs 211 and 213) shown in FIG. 3 is derived by the following formula (1).

$$\text{(Lower limit torque)} = \text{(Fixed value)} \times \text{(Suppression gain)} \ldots (1)$$

In this case, the fixed value may be a value corresponding to a predetermined minimum drive torque.

[Control Flow]

FIG. 5 is a flowchart of a control process according to this embodiment. This process flow may be realized by the ECU 108 reading and executing the program and various data according to this embodiment. In this case, the ECU 108 performs control by coordinating with various parts of the vehicle 100 by transmitting data to and receiving data from the various parts. When performing this process, the vehicle 100 is in a state of being able to travel, and is traveling in one of the traveling modes described above.

In step S501, the ECU 108 determines whether the current traveling mode of the vehicle 100 is the first traveling mode. When the current traveling mode is the first traveling mode (YES in step S501), the processing by the ECU 108 proceeds to step S502. On the other hand, when the current traveling mode is not the first traveling mode (NO in step S501), this processing flow ends. In this case, the vehicle 100 continues to travel in a mode other than the first traveling mode.

In step S502, the ECU 108 sets a start threshold based on the shift range. This corresponds to the thresholds 201 and 202 for the amount of brake operation shown in (a) of FIG. 4. The start threshold may be specified in advance according to the shift range, and the ECU 108 reads the start threshold from a storage portion (not illustrated) and sets the read start threshold.

In step S503, the ECU 108 acquires detection values from various sensors. In this embodiment, detection values such as vehicle speed and amount of brake operation may be acquired.

In step S504, the ECU 108 determines whether the amount of brake operation reaches the start threshold set in step S502, based on the detection value acquired in step S503. When the start threshold is reached (YES in step S504), the processing by the ECU 108 proceeds to step S505. On the other hand, when the start threshold is not reached (NO in step S504), the processing by the ECU 108 returns to step S503 and the processing is repeated.

In step S505, the ECU 108 derives the suppression gain based on the detection value acquired in step S505 and the shift range. As described with reference to FIG. 3, a Look-Up Table (LUT) or the like that associates the amount of brake operation with the shift range is defined in advance and stored in the storage portion, and the ECU 108 derives the suppression gain by referring to the LUT. A method of deriving the suppression gain is not limited to a table format, and the suppression gain may be derived using a predefined calculation formula.

In step S506, the ECU 108 begins suppressing the drive torque using the lower limit torque derived based on the suppression gain derived in step S506. When the drive torque is greater than the lower limit torque, such as from time t2 to t3 in (e) of FIG. 2, the drive torque is not limited.

In step S507, the ECU 108 determines whether the vehicle speed is equal to or lower than a predetermined threshold. In this case, the ECU 108 may acquire a detection value of the vehicle speed from the speed sensor 111. The threshold here is a threshold used to determine to disconnect the engine clutch 103, and corresponds to the threshold used in the determination at time t5 in FIG. 2. When the vehicle speed is equal to or lower than the threshold (YES in step S507), the processing by the ECU 108 proceeds to step S508. On the other hand, when the vehicle speed is greater than the threshold (NO in step S507), the processing by the ECU 108 returns to step S503 and repeats the processing.

In step S508, the ECU 108 starts the engagement operation of the motor clutch 106. The engagement operation here includes an operation to synchronize the motor rotation speed and the axle rotation, and it takes a certain amount of time to achieve synchronization. It is preferable to start the engagement operation of the motor clutch 106 before releasing the engine clutch 103. The time required for the engagement operation can be specified in advance, and the timing of starting the engagement operation can be controlled depending on that time.

In step S509, the ECU 108 releases the engine clutch 103. This prevents the engine stall from occurring due to a decrease in speed. As described using FIG. 2, the drive torque is already controlled to a constant value (substantially zero in the example of (e) of FIG. 2) when the engine clutch 103 is released.

In step S510, the ECU 108 engages the motor clutch 106. This is because the operation started in step S508 has normally performed rotation synchronization and the like, thereby engaging the motor clutch 106.

In step S511, the ECU 108 switches to the second traveling mode and continues traveling. In other words, the vehicle 100 continues traveling using the power of the motor 107. Then, this process flow ends.

As described above, this embodiment makes it possible to suppress a vehicle vibration that occurs due to control when sudden deceleration occurs while the motor clutch is in a released state. It is possible to suppress a vehicle vibration that occur due to control. In addition, by switching the control timing according to the shift range that corresponds to the regenerative braking force, it is possible to perform more appropriate vibration suppression control according to the state of the vehicle.

<Other Embodiments>

In the embodiment described above, the brake operation is described assuming an operation by the driver. However, the present invention is not limited to this, and the configuration of the present invention may be applied, for example, when an ECU or the like performs brake operation in a driving assistance function or an autonomous driving function such as an Advanced Driver-Assistance Systems (ADAS) or an Autonomous Driving System (ADS). Therefore, the amount of brake operation described above may be read as the amount of brake control by a system side and may be applied.

In the embodiment described above, a configuration is described in which the timing for limiting the deceleration torque is controlled based on the amount of brake operation. However, the present invention is not limited to this, and the timing for limiting the deceleration torque may be controlled based on the deceleration of the vehicle instead of the amount of brake operation. In this configuration, when the deceleration is equal to or greater than a predetermined threshold, the deceleration torque may be controlled to be limited by the lower limit torque. The threshold used in this configuration may differ depending on the shift range. In addition, a configuration may be used in which the deceleration torque is limited by the lower limit torque based on both the amount of brake operation and the deceleration, or the limit may be switched between being based on the amount of brake operation and being based on the deceleration depending on the traveling mode of the vehicle.

Further, in the embodiment described above, a configuration is described in which the drive torque due to regenerative brake is suppressed. Here, when a situation in which braking force is insufficient is anticipated, a configuration may be used in which the braking force is compensated for using a hydraulic brake (not illustrated) provided in the vehicle 100. In other words, control may be performed in which the hydraulic brake is also used in a section from time t3 to t8 in FIG. 2. This makes it possible to suppress a situation in which insufficient deceleration occurs due to insufficient braking force.

In addition, in the embodiment described above, an example is described in which the start threshold (corresponding to thresholds 201 and 202 in FIG. 2) for a brake operation is switched in association with the shift range, but the present invention is not limited to this. For example, a configuration may be used in which the start threshold for the brake operation is switched based on a condition (for example, slope or the like) of a road surface on which the vehicle 100 is traveling. The condition of the road surface may be identified based on map information, vehicle position information, information obtained by an environmental sensor equipped in the vehicle 100, and the like.

The above-described control may be configured to release the limitation of the drive torque imposed by the lower limit torque when the accelerator pedal is operated.

The above-described control may be configured to re-derive the value of the lower limit torque due to switching of the shift range.

In addition, in the present invention, a program or application for realizing the functions of one or more of the above-described embodiments can be supplied to a system or device via a network or a storage medium, and the like, and one or more processors in a computer of the system or device can read and execute the program, thereby realizing the present invention.

As such, the present invention is not limited to the above-described embodiments, and the present invention also contemplates mutual combinations of the various components of the embodiments, as well as modifications and applications by those skilled in the art based on the descriptions in the specification and well-known technologies, and these are included in the scope of protection sought.

As described above, the present specification discloses the following matters.

(1) A vehicle control device configured to control traveling of a vehicle by switching between connection and disconnection of a first power transmission path between an engine and a drive shaft and a second power transmission path between a rotation electric machine and the drive shaft, in which
when the first power transmission path is in an engaged state and the second power transmission path is in a released state, in response to an amount of brake operation for the vehicle exceeding a predetermined threshold, a deceleration torque by a regenerative brake is limited to be greater than a lower limit torque.

According to this configuration, it is possible to suppress a vehicle vibration that occurs due to control when sudden deceleration occurs while the motor clutch is in a released state.

(2) The vehicle control device according to (1), in which

the lower limit torque is derived using a fixed value and a suppression gain, and
the suppression gain varies depending on the amount of brake operation for the vehicle.

According to this configuration, it is possible to set a lower limit torque for limiting the deceleration torque in accordance with the amount of brake operation.

(3) The vehicle control device according to (2), in which
the suppression gain is set to a different value according to a plurality of shift ranges in which a regenerative braking force is different.

According to this configuration, it is possible to set a lower limit torque for limiting the deceleration torque in accordance with a shift range having a different regenerative braking force.

(4) The vehicle control device according to (1), in which
the predetermined threshold is set to a different value according to a plurality of shift ranges in which a regenerative braking force is different.

According to this configuration, it is possible to adjust the timing for limiting the deceleration torque in accordance with a shift range having a different regenerative braking force.

(5) The vehicle control device according to (4), in which
the predetermined threshold is set to a lower value in a shift range in which the regenerative braking force is stronger among the plurality of shift ranges.

According to this configuration, it is possible to adjust the timing so that the deceleration torque is limited earlier in a shift range in which the regenerative braking force is stronger.

(6) The vehicle control device according to (1), in which
the predetermined threshold is switched depending on a condition of a road surface on which the vehicle is traveling.

According to this configuration, it is possible to adjust the timing for limiting the deceleration torque depending on the condition of the road surface such as a slope.

(7) The vehicle control device according to (1), in which
when a brake operation on the vehicle is ended or an accelerator operation is performed, the limitation is ended.

According to this configuration, it is possible to release the limitation on the deceleration torque depending on an operation state of the brake or accelerator.

(8) The vehicle control device according to (1), in which
when the deceleration torque is limited, a braking force is compensated for by a hydraulic brake.

According to this configuration, even when the deceleration torque by the regenerative brake is insufficient, the hydraulic brake can compensate, thereby enabling a safe switching of the braking mode.

(9) The vehicle control device according to (1), in which

when the first power transmission path is in the engaged state, the first power transmission path is switched to the released state in response to a vehicle speed of the vehicle falling below a predetermined speed threshold, and the limitation is initiated before the first power transmission path is switched to the released state.

According to this configuration, it is possible to suppress the occurrence of engine stall when sudden deceleration occurs while the motor clutch is in a released state.
(10) The vehicle control device according to (9), in which
an engagement operation of the second power transmission path is initiated before disconnecting the first power transmission path.
According to this configuration, it is possible to minimize a period during which no power is supplied from either the engine or the motor.

REFERENCE SIGNS LIST

100: vehicle
101: engine
102: generator
103: engine clutch
104: drive shaft
105: driving wheel (front wheel)
106: motor clutch
107: motor
108: ECU
109: accelerator opening sensor
110: brake sensor
111: speed sensor
112: battery
113: axle
114: driven wheel (rear wheel)

**Claims**

**1.** A vehicle control device configured to control traveling of a vehicle by switching between connection and disconnection of a first power transmission path between an engine and a drive shaft and a second power transmission path between a rotation electric machine and the drive shaft, wherein
when the first power transmission path is in an engaged state and the second power transmission path is in a released state, in response to an amount of brake operation for the vehicle exceeding a predetermined threshold, a deceleration torque by a regenerative brake is limited to be greater than a lower limit torque.

**2.** The vehicle control device according to claim 1, wherein

the lower limit torque is derived using a fixed value and a suppression gain, and
the suppression gain varies depending on the amount of brake operation for the vehicle.

**3.** The vehicle control device according to claim 2, wherein
the suppression gain is set to a different value according to a plurality of shift ranges in which a regenerative braking force is different.

**4.** The vehicle control device according to claim 1, wherein
the predetermined threshold is set to a different value according to a plurality of shift ranges in which a regenerative braking force is different.

**5.** The vehicle control device according to claim 4, wherein

the predetermined threshold is set to a lower value in a shift range in which the regenerative braking force is stronger among the plurality of shift ranges.

**6.** The vehicle control device according to claim 1, wherein
the predetermined threshold is switched depending on a condition of a road surface on which the vehicle is traveling.

**7.** The vehicle control device according to claim 1, wherein
when a brake operation on the vehicle is ended or an accelerator operation is performed, the limitation is ended.

**8.** The vehicle control device according to claim 1, wherein
when the deceleration torque is limited, a braking force is compensated for by a hydraulic brake.

**9.** The vehicle control device according to claim 1, wherein

when the first power transmission path is in the engaged state, the first power transmission path is switched to the released state in response to a vehicle speed of the vehicle falling below a predetermined speed threshold, and the limitation is initiated before the first power transmission path is switched to the released state.

**10.** The vehicle control device according to claim 9, wherein
an engagement operation of the second power transmission path is initiated before disconnecting the first power transmission path.

*FIG. 1*

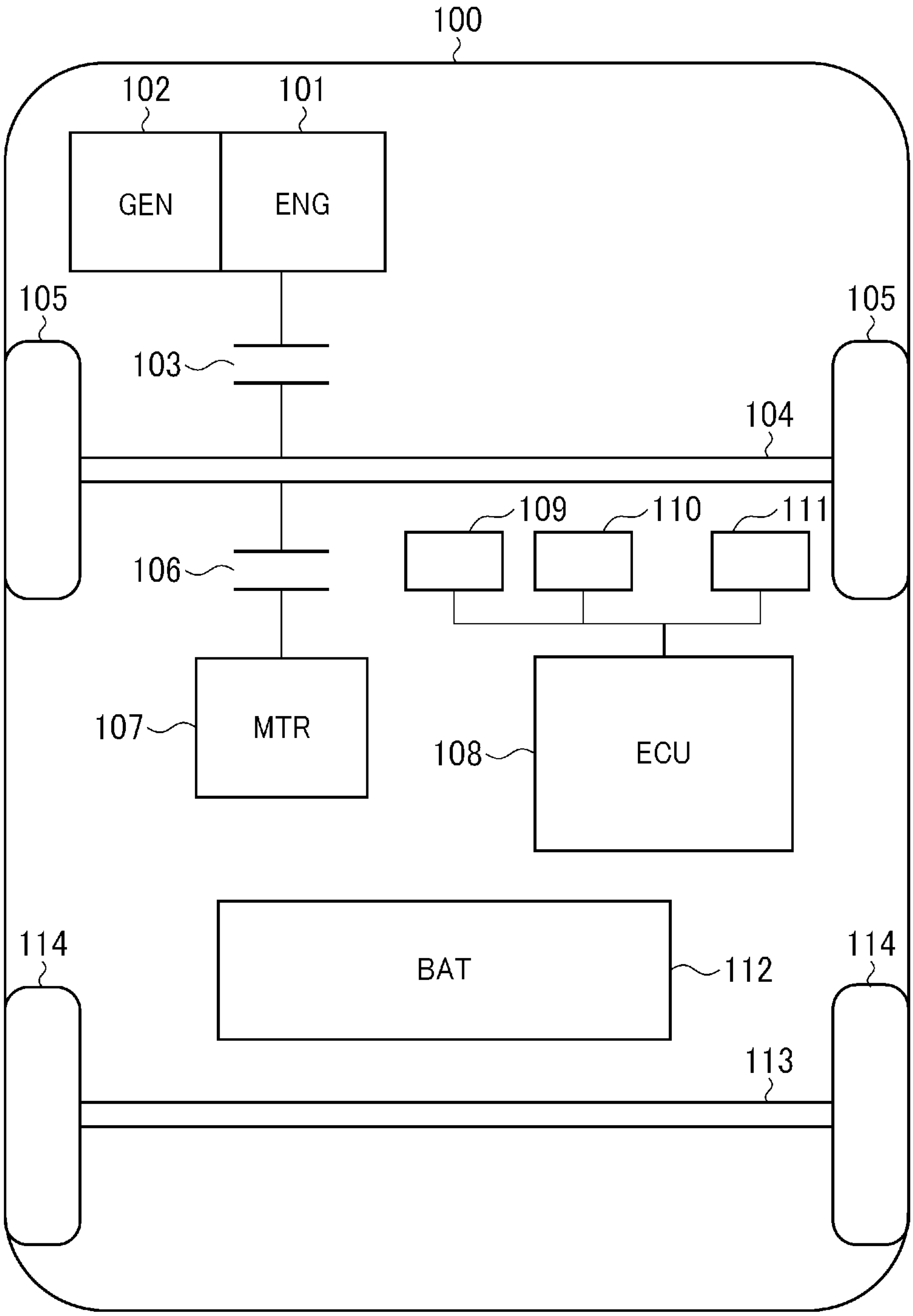
100
102
101
GEN
ENG
105
105
103
104
109
110
111
106
107
MTR
108
ECU
114
114
BAT
112
113

FIG. 2

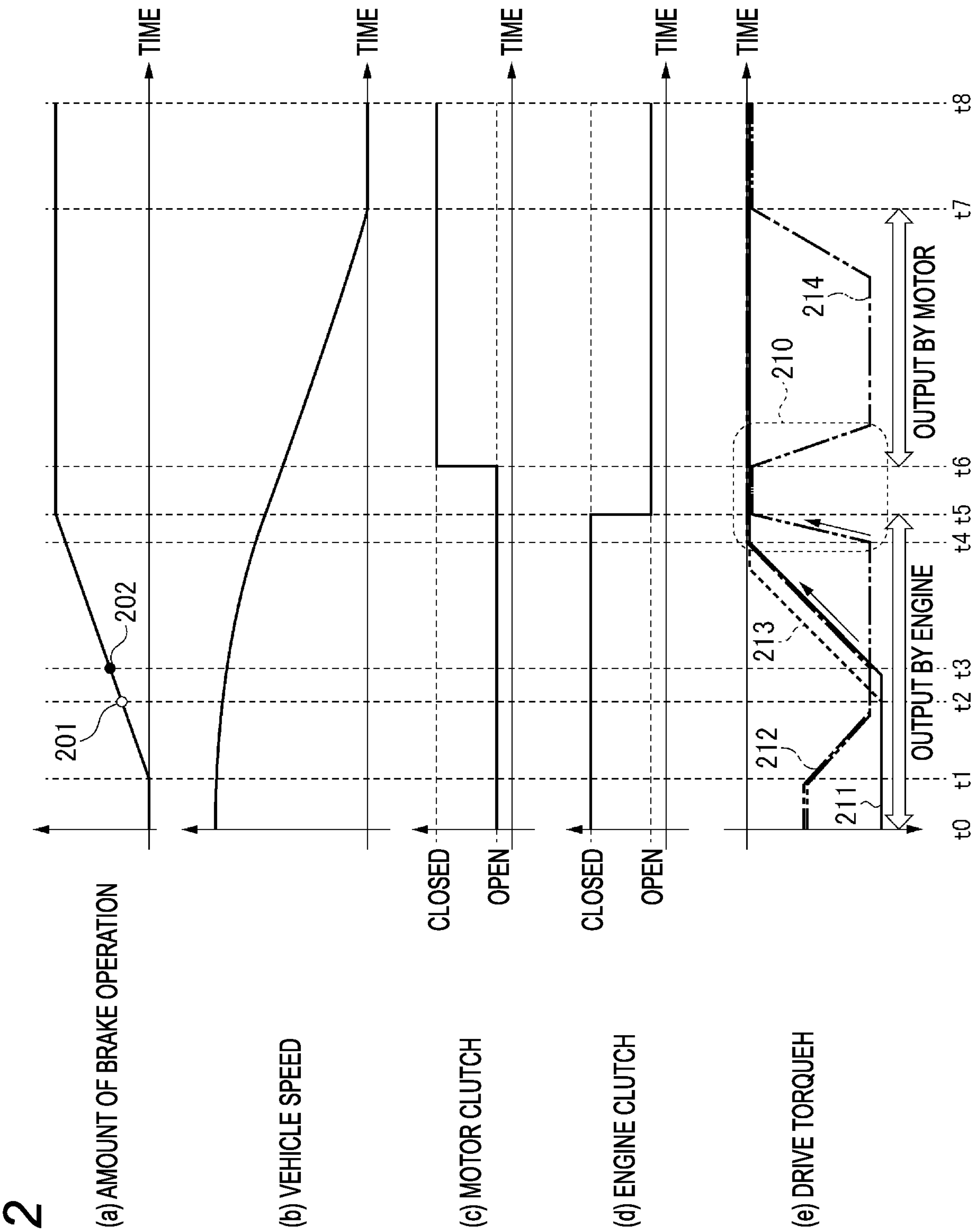
(a) AMOUNT OF BRAKE OPERATION
(b) VEHICLE SPEED
(c) MOTOR CLUTCH
(d) ENGINE CLUTCH
(e) DRIVE TORQUEH
CLOSED
OPEN
CLOSED
OPEN
TIME
TIME
TIME
TIME
TIME
201
202
210
211
212
213
214
OUTPUT BY ENGINE
OUTPUT BY MOTOR
t0
t1
t2
t3
t4
t5
t6
t7
t8

*FIG. 3*

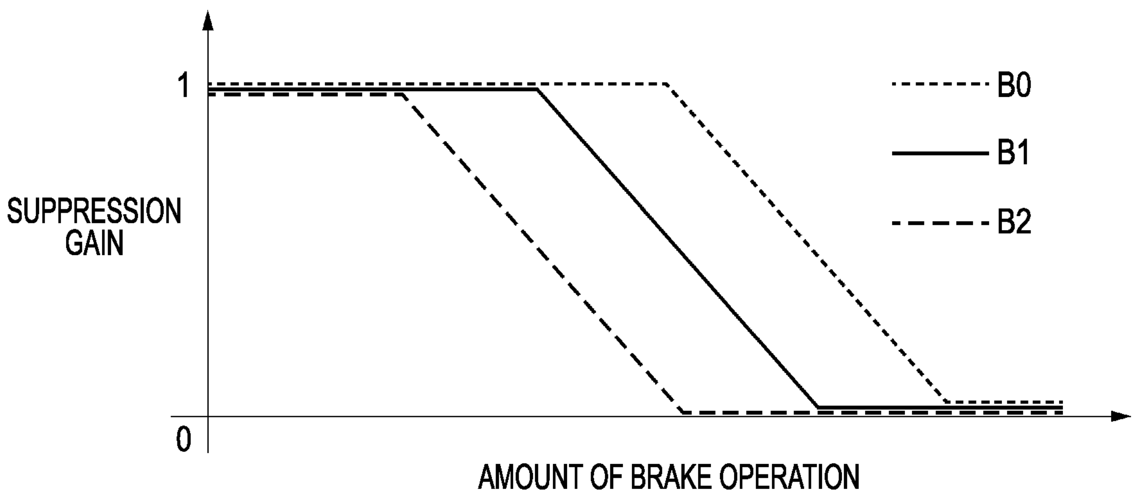

FIG. 4

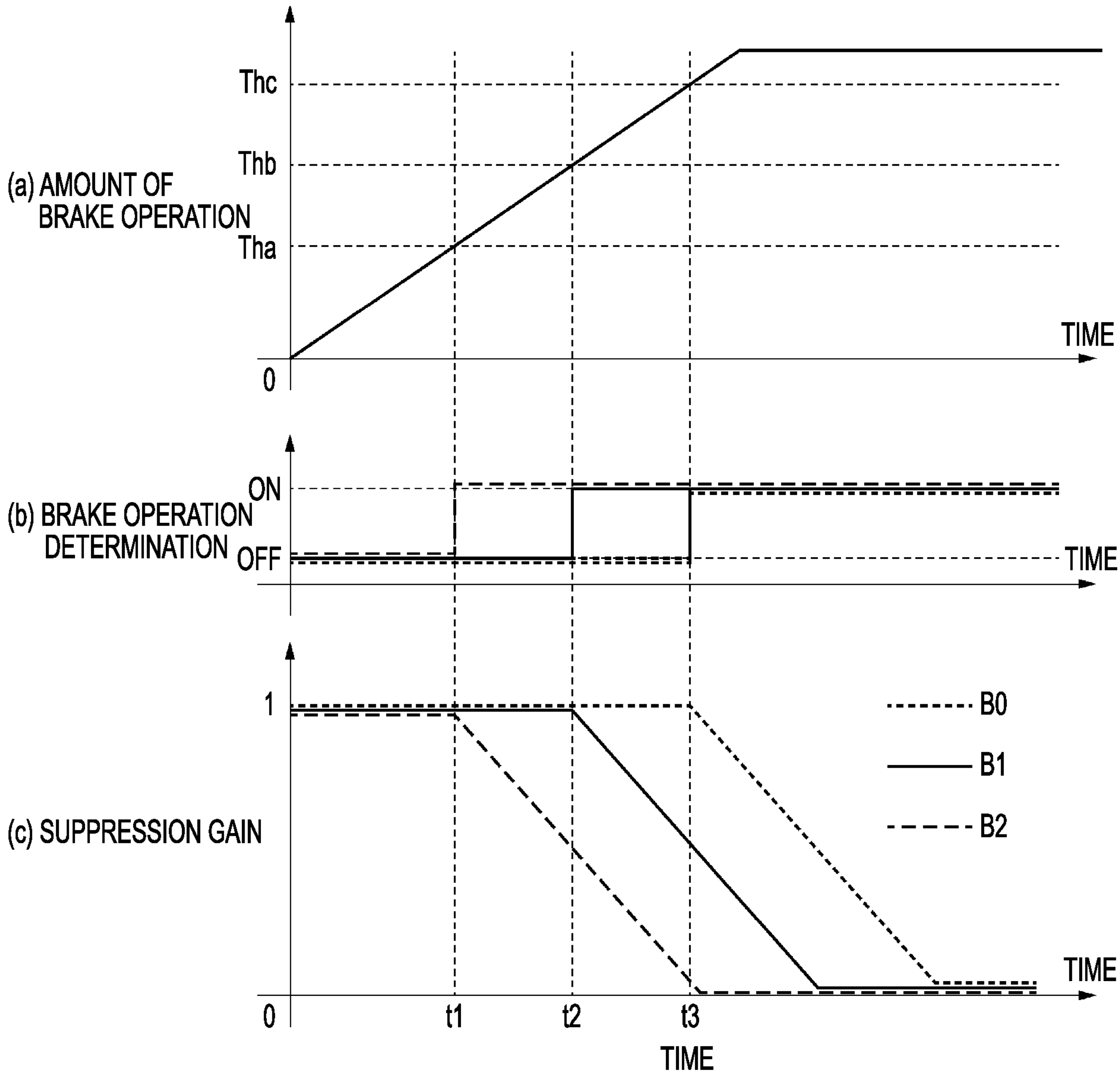
Thc
Thb
(a) AMOUNT OF BRAKE OPERATION
Tha
TIME
0
ON
(b) BRAKE OPERATION DETERMINATION
OFF
TIME
1
B0
B1
B2
(c) SUPPRESSION GAIN
TIME
0
t1
t2
t3
TIME

FIG. 5

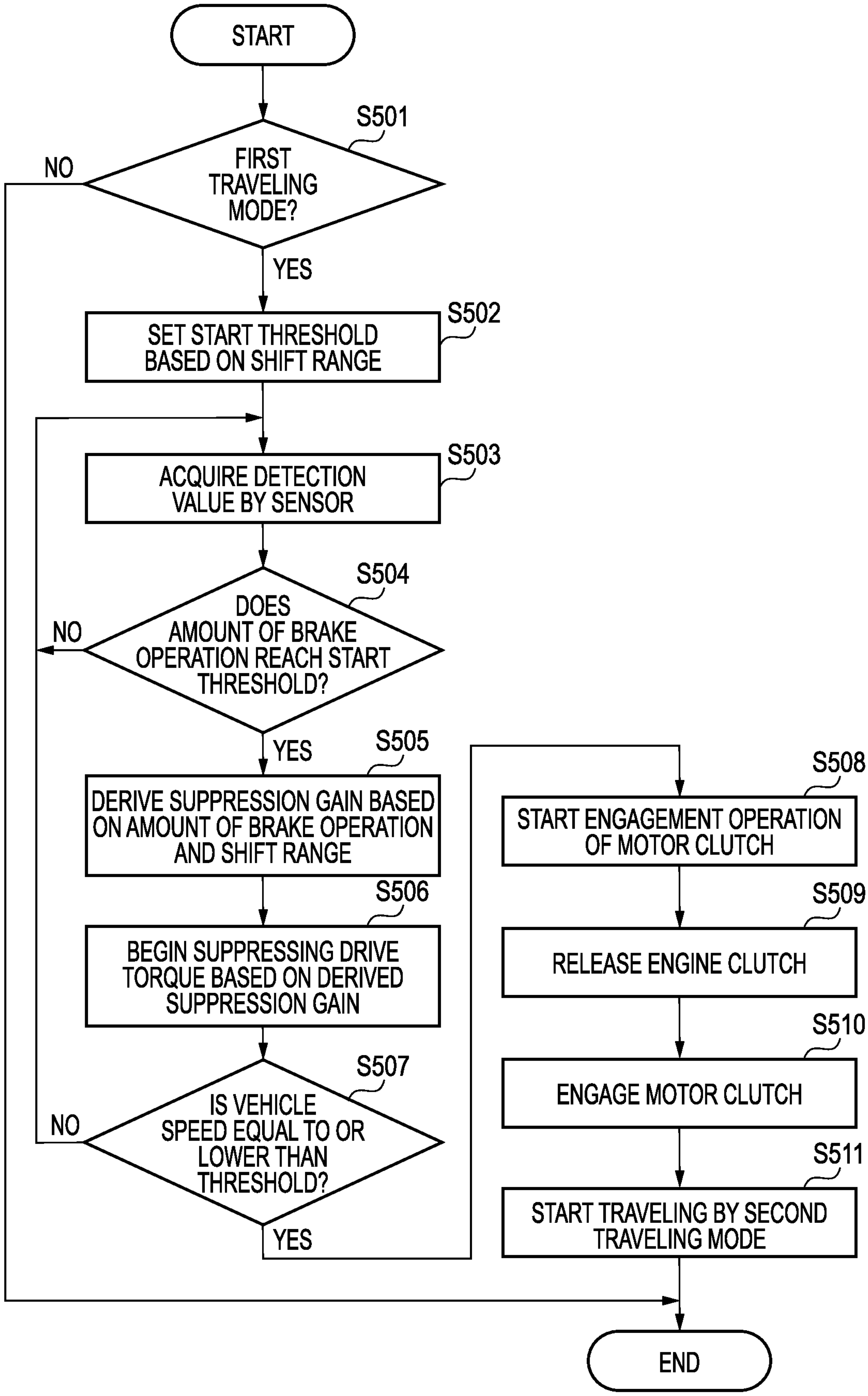
START
S501
FIRST TRAVELING MODE?
NO
YES
S502
SET START THRESHOLD BASED ON SHIFT RANGE
S503
ACQUIRE DETECTION VALUE BY SENSOR
S504
DOES AMOUNT OF BRAKE OPERATION REACH START THRESHOLD?
NO
YES
S505
DERIVE SUPPRESSION GAIN BASED ON AMOUNT OF BRAKE OPERATION AND SHIFT RANGE
S506
BEGIN SUPPRESSING DRIVE TORQUE BASED ON DERIVED SUPPRESSION GAIN
S507
IS VEHICLE SPEED EQUAL TO OR LOWER THAN THRESHOLD?
NO
YES
S508
START ENGAGEMENT OPERATION OF MOTOR CLUTCH
S509
RELEASE ENGINE CLUTCH
S510
ENGAGE MOTOR CLUTCH
S511
START TRAVELING BY SECOND TRAVELING MODE
END

## INTERNATIONAL SEARCH REPORT

International application No. **PCT/JP2022/008696**

**A. CLASSIFICATION OF SUBJECT MATTER**

***B60K 6/442***(2007.10)i; ***B60W 10/02***(2006.01)i; ***B60W 10/18***(2012.01)i
FI: B60W10/18 900; B60K6/442; B60W10/02 900

According to International Patent Classification (IPC) or to both national classification and IPC

**B. FIELDS SEARCHED**

Minimum documentation searched (classification system followed by classification symbols)

B60K6/442; B60W10/02; B60W10/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-46115 A (TOYOTA MOTOR CORP.) 08 March 2012 (2012-03-08) entire text, all drawings | 1-10 |
| A | JP 2017-100590 A (HONDA MOTOR CO., LTD.) 08 June 2017 (2017-06-08) entire text, all drawings | 1-10 |
| A | JP 2017-3003 A (NISSAN MOTOR CO., LTD.) 05 January 2017 (2017-01-05) entire text, all drawings | 1-10 |
| A | WO 2017/217067 A1 (MITSUBISHI JIDOSHA KOGYO KK) 21 December 2017 (2017-12-21) entire text, all drawings | 1-10 |
| A | WO 2020/065800 A1 (NISSAN MOTOR CO., LTD.) 02 April 2020 (2020-04-02) entire text, all drawings | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008696**

| Patent document cited in search report | Publication date (day/month/year) | Patent family member(s) | Publication date (day/month/year) |
|---|---|---|---|
| JP 2012-46115 A | 08 March 2012 | (Family: none) | |
| JP 2017-100590 A | 08 June 2017 | US 2017/0158043 A1<br>entire text, all drawings<br>CN 107020945 A | |
| JP 2017-3003 A | 05 January 2017 | (Family: none) | |
| WO 2017/217067 A1 | 21 December 2017 | US 2019/0270373 A1<br>entire text, all drawings<br>EP 3453548 A1<br>KR 10-2019-0005976 A | |
| WO 2020/065800 A1 | 02 April 2020 | CN 112752689 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020148973 A